# FASCICULE DE BREVET EUROPEEN

(11) **EP 2 880 629 B1**
(45) Date de publication et mention de la délivrance du brevet: **05.10.2016**
(21) Numéro de dépôt: 13756651.9
(22) Date de dépôt: 01.08.2013
(51) Int. Cl.: G06T 7/00

(54) **PROCEDE DE CONTROLE NON DESTRUCTIF D'UNE PREFORME D'AUBE**
VERFAHREN ZUM ZERSTÖRUNGSFREIEN PRÜFEN EINER SCHAUFELVORFORM
METHOD FOR THE NON-DESTRUCTIVE TESTING OF A BLADE PREFORM

(30) Priorité: 03.08.2012 FR 1257613
(43) Date de publication de la demande: 10.06.2015
(73) Titulaire: SNECMA, 75015 Paris (FR)
(72) Inventeur: MAROLLE, Philippe, F-77550 Moissy Cramayel Cedex (FR); LEROYER, Bertrand, Pierre, Martin, F-77550 Moissy Cramayel Cedex (FR); LEONETTI, Claude, F-91080 Courcouronnes (FR)
(74) Mandataire: Jolly, Christophe
(86) Numéro de dépôt international: PCT/FR2013/051868
(87) Numéro de publication internationale: WO 2014/020288

(56) Documents cités:
- LIANG XINHE ET AL: "A rapid inspection method for Large Water Turbine Blade", MECHATRONICS AND AUTOMATION (ICMA), 2010 INTERNATIONAL CONFERENCE ON, IEEE, PISCATAWAY, NJ, USA, 4 août 2010 (2010-08-04), pages 712-716, XP031765839, ISBN: 978-1-4244-5140-1
- YONG-KAI ZHU ET AL: "A Review of Optical NDT Technologies", SENSORS, vol. 11, no. 12, 8 août 2011 (2011-08-08), pages 7773-7798, XP055055135, DOI: 10.3390/s110807773
- A. KUS ET AL: "A comparative study of 3D scanning in engineering, product and transport design and fashion design education", COMPUTER APPLICATIONS IN ENGINEERING EDUCATION, vol. 17, no. 3, 1 septembre 2009 (2009-09-01), pages 263-271, XP055055683, ISSN: 1061-3773, DOI: 10.1002/cae.20213
- WOLF K ET AL: "An approach to computer-aided quality control based on 3D coordinate metrology", JOURNAL OF MATERIALS PROCESSING TECHNOLOGY, ELSEVIER, NL, vol. 107, no. 1-3, 19 avril 1999 (1999-04-19), pages 96-110, XP002245242, ISSN: 0924-0136, DOI: 10.1016/S0924-0136(00)00668-3
- KUMAR A: "Computer-Vision-Based Fabric Defect Detection: A Survey", IEEE TRANSACTIONS ON INDUSTRIAL ELECTRONICS, IEEE SERVICE CENTER, PISCATAWAY, NJ, USA, vol. 55, no. 1, 1 janvier 2008 (2008-01-01), pages 348-363, XP011321122, ISSN: 0278-0046, DOI: 10.1109/TIE.1930.896476

## Description

La présente invention concerne un procédé de contrôle non destructif d'une préforme tissée, telle par exemple qu'une préforme d'aube de soufflante de turbomachine.

A l'heure actuelle, les aubes de soufflante sont réalisées par tissage d'une préforme suivi d'une injection d'une résine à l'intérieur de la préforme. Préalablement à l'injection de résine, il est important de contrôler certains paramètres de la préforme tissée tels que par exemple le taux de fibres et l'orientation des fibres.

A cette fin, il est connu de réaliser un quadrillage sur une surface externe de l'aube telle que l'intrados ou l'extrados de l'aube, ce quadrillage étant réalisé au moyen de premiers et seconds fils marqueurs entrecroisés.

Pour déterminer la position des intersections du quadrillage, la préforme tissée est placée en regard d'un bras portant un laser déplaçable dans un plan parallèle à l'horizontale en regard de la préforme. L'opérateur déplace successivement le laser aux différentes intersections du quadrillage de manière à ce que le laser illumine les intersections. Les positions du laser et donc des intersections sont ainsi enregistrées successivement.

A partir des positions réelles mesurées des intersections, il est possible de déduire des informations relatives par exemple au volume de fibres dans les différentes zones de la préforme délimitées par le quadrillage des premiers et seconds fils traceurs. Ces valeurs sont ensuite comparées à des valeurs théoriques, ce qui permet de déterminer si le tissage a été correctement réalisée et si les opérations subséquentes au tissage, telles que les découpes des bords de la préforme, et préalables à l'opération de contrôle non destructif ont eues une influence sur la forme de la préforme.

Toutefois, cette technique nécessite des temps d'inspection longs, et s'avère peu fiable puisqu'elle dépend de la visée laser réalisée manuellement par un opérateur. De plus, elle ne permet de mesurer la position des intersections que dans un plan sensiblement parallèle au plan de déplacement du laser, elle ne permet pas de tenir compte de la position des intersections selon l'axe du laser et est donc peu adaptée pour une préforme d'aube de soufflante tissée qui n'est pas plane et est fortement courbée dans les trois dimensions de l'espace.

L'invention apporte une solution simple et économique à ce problème en permettant un contrôle non destructif automatisé des préformes du type précité.

A cette fin, elle propose un procédé automatisé de contrôle non destructif d'une préforme tissée, destinée à la fabrication d'une pièce de turbomachine et comprenant une pluralité de premiers fils marqueurs entrecroisés avec des seconds fils marqueurs, les premiers et seconds fils ayant des propriétés de réflexion de la lumière différentes de celles des fils de la préforme et étant tissés avec les fils de la préforme de manière à former un quadrillage de surface sur une zone donnée de la préforme, le procédé consistant successivement à :
a) placer la préforme dans une position prédéterminée de manière à ce que le quadrillage de premiers et seconds fils marqueurs soit situé en regard d'au moins deux capteurs d'images visant le quadrillage et ayant des axes optiques formant un angle l'un avec l'autre ,
b) éclairer la zone donnée de la préforme et acquérir avec chaque capteur d'images une image du quadrillage de premiers et seconds fils marqueurs ;
c) déterminer pour chaque image les coordonnées dans le repère de l'image des points d'intersection des premiers et seconds fils marqueurs ;
d) déduire la position réelle dans l'espace de chaque point d'intersection des premiers et seconds fils marqueurs sur la préforme par un calcul de triangulation en utilisant les coordonnées du point d'intersection considéré dans chacune des images obtenues avec les capteurs d'images et au moyen des positions réelles des capteurs dans l'espace et de l'orientation de leurs axes respectifs dans l'espace ;
e) comparer les positions réelles des points d'intersection des premiers et seconds fils marqueurs avec des positions théoriques tridimensionnelles de ces mêmes points d'intersection.

Selon l'invention, les premiers et seconds fils marqueurs ont des propriétés de réflexion de la lumière différentes de celles des fils de la préforme, ce qui permet de bien les distinguer des fils de la préforme par différence de contraste sur les images prises à l'étape b du procédé selon l'invention.

A la différence de la technique antérieure, la préforme est placée sur un support permettant de la positionner dans une position prédéterminée en regard de deux capteurs d'images. Par la suite, le procédé consiste à prendre plusieurs images du quadrillage de la préforme et à en déduire automatiquement les positions des intersections du quadrillage formé par les premiers et seconds fils marqueurs sans intervention manuelle d'un opérateur, ce qui augmente la précision et la répétabilité des mesures réalisées.

Enfin, l'utilisation de deux capteurs d'images dont les axes optiques forment un angle l'un par rapport à l'autre permet de déduire par triangulation les trois coordonnées X, Y, Z dans l'espace de chaque intersection, ce qui n'était pas possible avec la technique antérieure.

Dans un mode de réalisation préféré de l'invention, l'étape c consiste à :
- déterminer sur chaque image les contours de zones correspondant aux parties visibles des premiers et seconds fils marqueurs ;
- déterminer pour chaque image des régions comprenant des zones précitées alignées selon les premiers fils marqueurs et les régions comprenant des zones précitées alignées selon les seconds fils marqueurs ;
- déterminer dans chaque région précitée d'image les coordonnées (xᵢ, yᵢ) du centre ou barycentre des différentes zones correspondant aux parties visibles des premiers et seconds fils marqueurs et à générer une courbe mathématique telle qu'une courbe de NURBS passant au mieux par ces coordonnées (xᵢ, yᵢ) ;
- déterminer les coordonnées des points d'intersections entre les courbes mathématiques s'étendant selon les premiers fils marqueurs et les courbes s'étendant selon les seconds fils marqueurs.

Selon une réalisation de l'invention, les contours des zones correspondant aux parties visibles des premiers et seconds fils marqueurs sont déterminés par seuillage dynamique en fonction de leur forme et du niveau de réflexion de la lumière par rapport au reste de l'image.

Dans une réalisation de l'invention, le centre de chaque zone de partie visible des premiers et seconds fils marqueurs est déterminé en assimilant chaque zone à une ellipse. On fait ainsi l'hypothèse que les parties visibles des fils marqueurs ont tous une forme sensiblement elliptique, ce qui est le cas du fait du tissage des premiers et seconds fils marqueurs avec les fils de la préforme conduisant à un passage alterné dessus et dessous des fils de la préforme.

Préférentiellement, les étapes b et c sont répétées n fois et les étapes suivantes, c'est-à-dire les étapes d et e, sont initiées en fonction du calcul d'un critère de précision souhaité de mesure des coordonnées de chaque intersection.

Dans une réalisation pratique de l'invention, le critère de précision consiste en un calcul d'écart type sur les coordonnées de chaque intersection dans chaque image, les étapes suivant les étapes b et c étant initiées pour un écart-type inférieur à un seuil donné.

Dans une réalisation de l'invention, le nombre n est supérieur ou égal à 10.

Dans le cas d'une turbomachine, la préforme peut être une préforme d'aube de soufflante et le quadrillage de premiers et seconds fils marqueurs peut être formé sur la face d'extrados ou la face d'intrados de l'aube.

Selon une autre caractéristique de l'invention, la préforme est tissée avec des fils de carbone et les fils marqueurs sont réalisés par un assemblage de fils de verre et de fils de carbone, les fils de verre étant de couleur plus claire que les fils de carbone.

Avantageusement, la préforme est montée sur un support conformé pour supporter la préforme dans une position prédéterminée puis est déplacée en regard des capteurs d'images agencés à l'intérieur d'une enceinte à parois absorbant les rayons lumineux et logeant des moyens d'éclairage de la préforme.

Dans une réalisation pratique de l'invention, les capteurs d'images ont une résolution de 10 Mégapixels et une focale d'environ 8,5 mm.

D'autres avantages et caractéristiques de l'invention apparaîtront à la lecture de la description suivante faite à titre d'exemple non limitatif et en référence aux dessins annexés dans lesquels :
- la figure 1 est une vue schématique en perspective d'un dispositif de contrôle non destructif pour la mise en oeuvre du procédé selon l'invention ;
- la figure 2 est une vue schématique en perspective d'une préforme tissée d'aube de soufflante montée sur un support dans une position prédéterminée ;
- la figure 3 est une représentation schématique de l'intérieur de l'enceinte du dispositif de la figure 1 ;
- la figure 4 illustre les principales étapes du procédé selon l'invention ;
- les figures 5 à 13 représentent les différents traitements mathématiques appliqués aux images de la préforme, ces figures représentent schématiquement les images obtenues et le contraste a été volontairement inversé pour une facilité de représentation de sorte que les éléments réfléchissants apparaissent en noir et inversement.

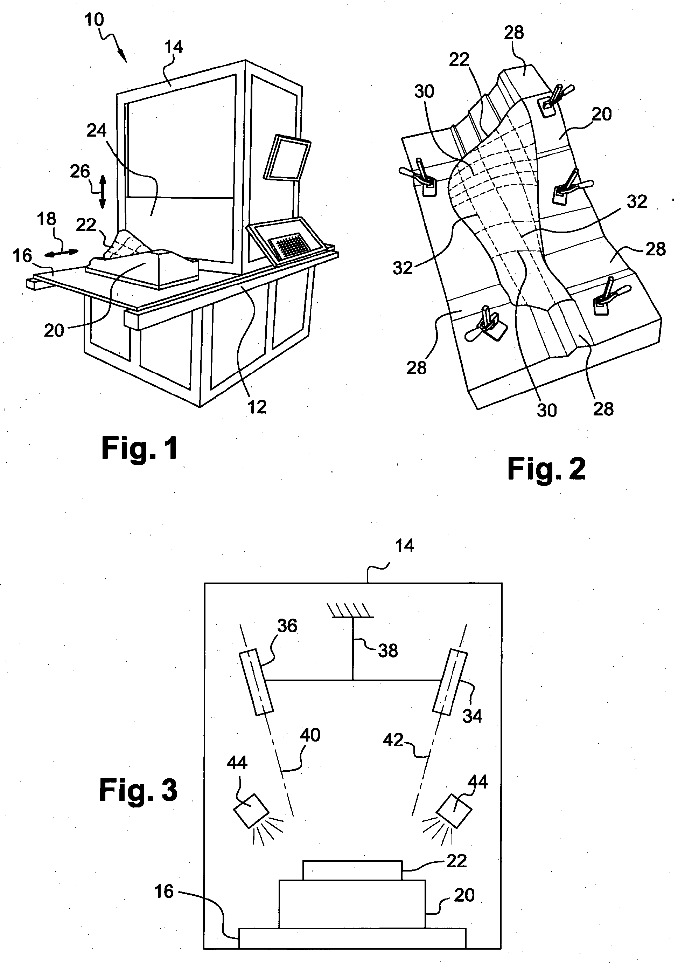

La figure 1 représente schématiquement un dispositif de mise en oeuvre du procédé de contrôle non destructif d'une préforme tissée d'aube de soufflante proposé dans le cadre de l'invention, ce dispositif 10 comprenant un bâti 12 portant une enceinte 14 de forme parallélépipédique et un plateau mobile 16 selon une direction horizontale 18 entre une première position où celui-ci est à l'extérieur de l'enceinte 14 et une deuxième position où il est à l'intérieur de l'enceinte 14 (figure 3). Le plateau mobile 16 porte un support 20 sur lequel la préforme d'aube 22 est placée dans une position prédéterminée. L'enceinte 14 comprend un panneau mobile 24 en translation selon une direction 26 perpendiculaire à la direction horizontale 18 et découvrant une ouverture au travers de laquelle le plateau 16 est déplacé pour venir à l'intérieur de l'enceinte 14 (figure 1).

La figure 2 représente le support 20 de la préforme d'aube tissée. Le support comprend plusieurs bossages 28 dimensionnés et répartis de manière 20 à positionner la préforme dans une position prédéterminée sur le support 20. Les bossages du support évitent que la préforme d'aube 22 qui possède une certaine souplesse ne se déforme et permettent ainsi de garantir que l'opération de contrôle non destructif sera réalisée sur une préforme d'aube 22 conformée en trois dimensions dans un état non déformé.

La préforme d'aube 22 comprend une pluralité de premiers fils marqueurs 30 entrecroisés avec des seconds fils marqueurs 32 et tissés avec les fils de la préforme sur la surface d'extrados de la préforme d'aube de soufflante de manière à former un quadrillage. Les premiers et seconds fils marqueurs 30, 32 ont des propriétés de réflexion de la lumière différentes de celles des fils de la préforme de manière à rendre bien visible le quadrillage des premiers et seconds fils marqueurs par rapport aux fils de la préforme. Dans l'exemple représenté les fils marqueurs 30, 32 sont de couleur blanche et les fils de la préforme sont de couleur noire.

La figure 3 représente le support 20 et la préforme 22 à l'intérieur de l'enceinte 14 dans laquelle sont logés des moyens de prise d'images comprenant au moins deux capteurs d'images 34, 36 montés sur un support 38 à une distance connue l'un de l'autre et dont les axes 40, 42 forment un angle connu l'un avec l'autre. La préforme d'aube 22 est agencée sur son support 20 de manière à ce que les deux capteurs d'images 30, 38 visent le quadrillage des premiers et seconds fils marqueurs 30, 32. L'enceinte 14 loge également des moyens d'éclairage 44 du quadrillage de la préforme d'aube 22.

Comme représenté en figure 1, l'enceinte 14 comprend des parois opaques aux rayons lumineux et absorbant les rayons lumineux qui pourraient être réfléchis vers les parois par le support 20, la préforme 22 ou tout autre élément à l'intérieur de l'enceinte tels que les capteurs d'images 34, 36. De cette manière, il est possible de bien contrôler l'intensité de la lumière envoyée vers la préforme d'aube 22 et on limite les réflexions sur les parois de l'enceinte. On limite également la lumière provenant de l'extérieur.

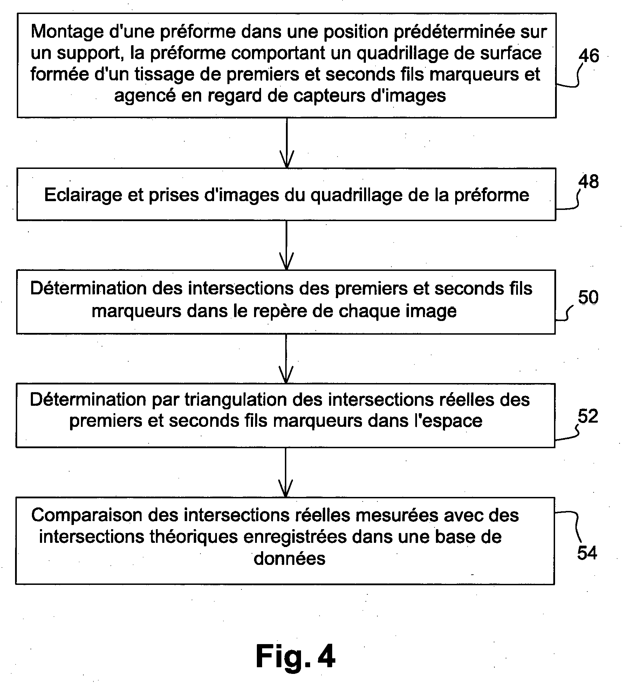

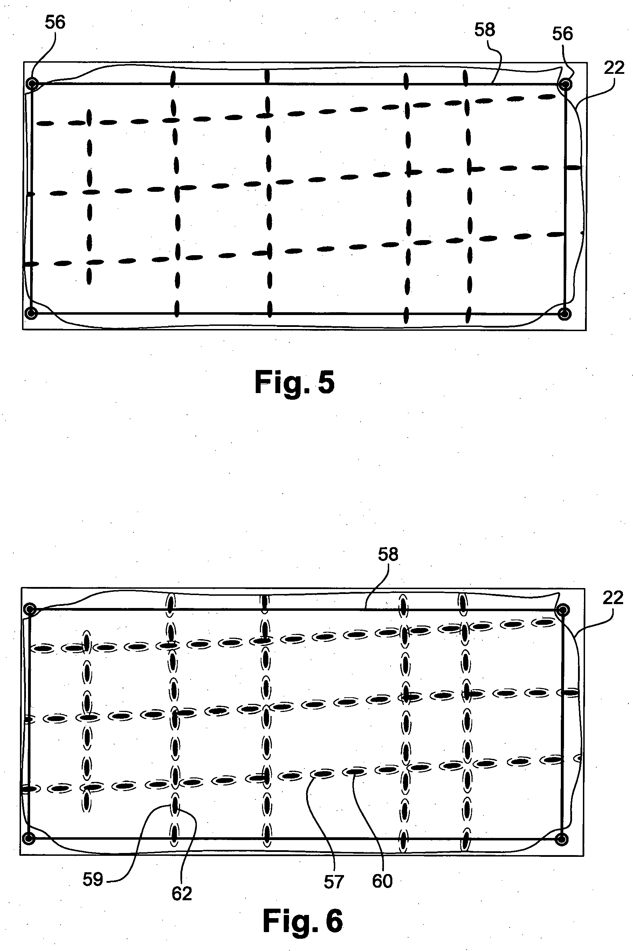

Dans la suite de la description, il sera simultanément fait référence à la figure 4 illustrant les grandes phases successives du procédé de contrôle non destructif selon l'invention et successivement aux figures 5 à 13 montrant des images des traitements appliqués aux images prises avec les capteurs d'images.

Dans une première étape 46, un opérateur positionne la préforme sur son support 20 dans une position prédéterminée connue en regard des capteurs d'images 34, 36.

Dans une seconde étape 48, le procédé consiste ensuite à éclairer le quadrillage des premiers et seconds fils marqueurs 30, 32 de la préforme avec les moyens d'éclairage et à prendre une image de ce quadrillage avec chaque capteur d'images 34, 36.

Dans une troisième étape 50, le procédé consiste à déterminer les intersections des premiers et seconds fils marqueurs 30, 32 dans le repère de chaque image. A cette fin, plusieurs traitements mathématiques sont appliqués aux images prises avec les capteurs 34, 36 et sont décrits ci-dessous en référence aux figures 5 à 13.

En premier lieu, pour chaque image on détermine à partir de repères 56 sur l'image une zone de travail 58 comprenant le quadrillage (figure 5). Ces repères sur l'image sont obtenus au moyens d'organes réfléchissants la lumière formés sur le support 20.

Un filtre de suppression du bruit et des basses fréquences de l'image est appliqué à chaque de zone de travail 58 de chaque image de manière à rehausser le contraste des parties visibles des premiers et seconds fils marqueurs 30, 32 par rapport au fond de l'image. Ce type de filtrage par morphologie mathématique est bien connu de l'homme du métier et ne nécessite pas de description particulière.

On détermine ensuite les contours 57, 59 des zones correspondant aux parties visibles des premiers et seconds fils marqueurs, par seuillage dynamique en fonction de la forme et du niveau de réflexion de la lumière des parties visibles 60, 62 par rapport au reste de l'image (figure 6). Ce type de seuillage, connu de l'homme de l'art, consiste à isoler les pixels de l'image en fonction d'une forme donnée, d'un contour et d'un niveau de gris par rapport au fond de l'image. Ce type de filtre s'appuie également sur la fréquence d'identification des pixels de fils marqueurs et de leurs niveaux de gris.

En particulier, du fait du tissage des premiers et seconds fils marqueurs 30, 32 avec les fils de la préforme conduisant à un passage alterné des fils marqueurs dessus et dessous les fils de la préforme, les parties visibles 60, 62 des premiers et seconds fils marqueurs 30, 32, c'est-à-dire les parties situées au dessus des fils de la préforme ont une forme générale elliptique et cette information peut ainsi être utilisée comme paramètre discriminant pour la détection des parties visibles des premiers et seconds fils marqueurs au sein de chaque image.

Il est ensuite possible de déterminer, pour chaque partie visible 60, 62 d'un fil marqueur 30, 32, les coordonnées xᵢ, yᵢ du centre de l'ellipse.

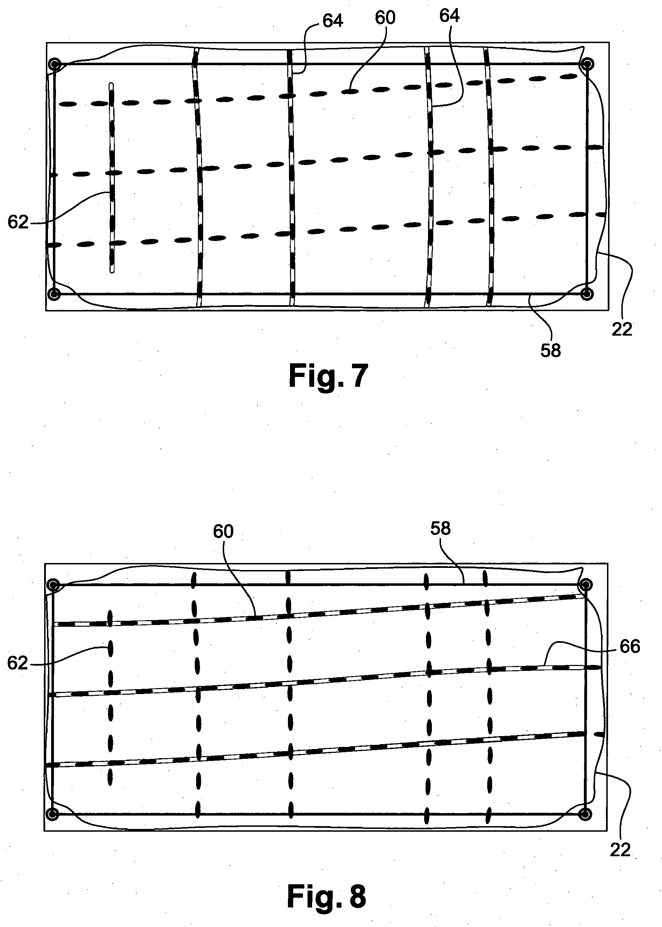

On détermine ensuite les régions 64 de l'image comprenant des parties visibles de fils marqueurs alignées selon les premiers fils marqueurs 30 (figure 7) et les zones 66 comprenant des parties visibles alignées selon les seconds fils marqueurs 32 (figure 8).

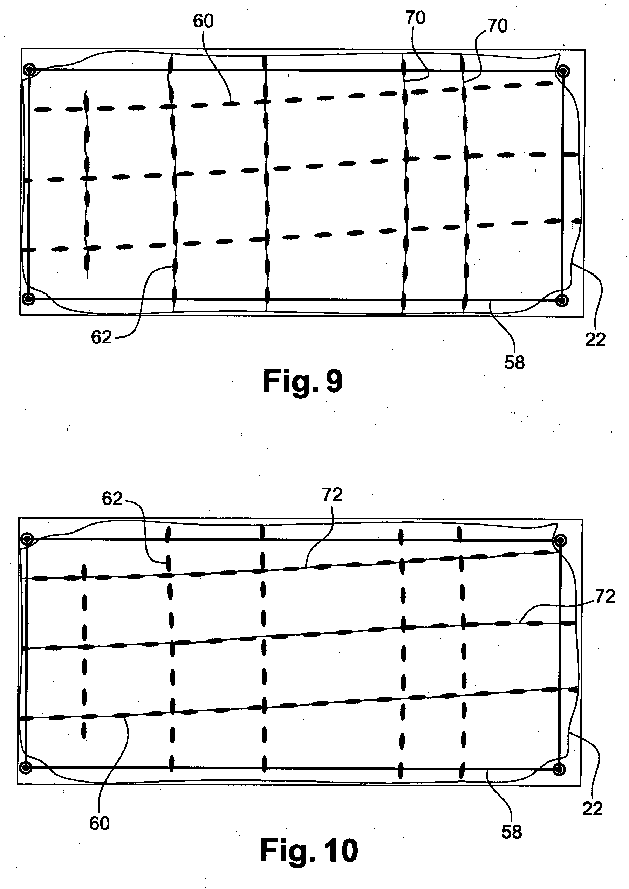

Dans chaque région 64, 66 ainsi délimitée, on détermine ensuite une courbe mathématique telle qu'une courbe de NURBS passant au mieux par les coordonnées xᵢ, yᵢ correspondant au centre des parties visibles appartenant à cette région 64, 66. La figure 9 représente les courbes 70 mathématiques obtenues dans les régions 64 orientées selon les premiers fils marqueurs 30 et la figure 10 représente les courbes mathématiques 72 obtenues dans les régions 66 orientées selon les seconds fils marqueurs 32.

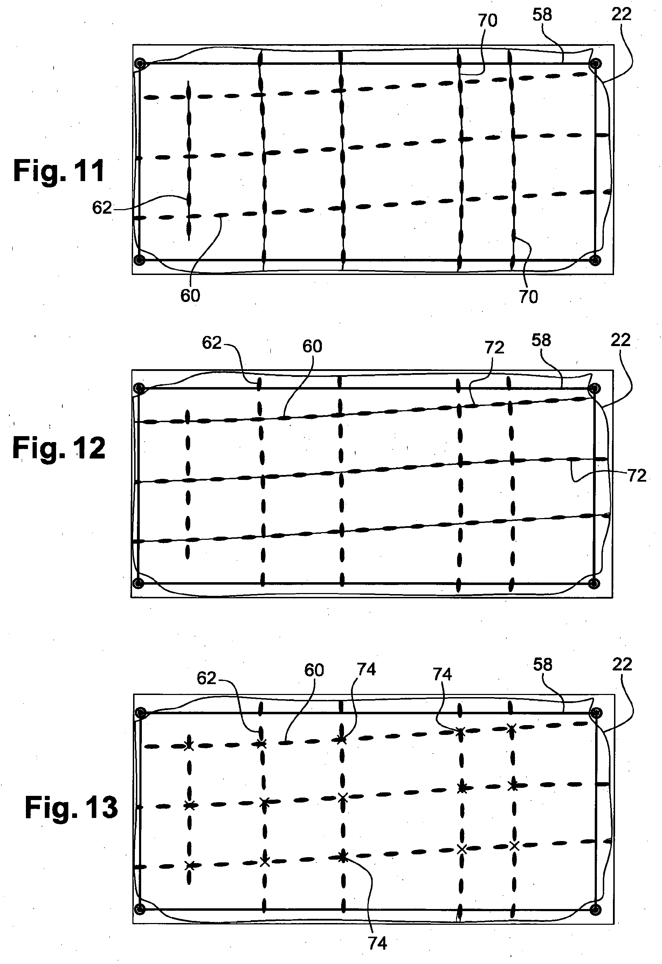

Un lissage des courbes mathématiques 70, 72 est ensuite effectué (figures 11 et 12) pour éliminer les aberrations de courbures sur les courbes mathématiques et les coordonnées des points d'intersection 74 entre les courbes mathématiques s'étendant selon les premiers et les seconds fils marqueurs 30, 32 sont ensuite déterminées (figure 13). Ces intersections seront notées 1 (x_{capteur1}, y_{capteur1}) pour une intersection donnée I dans le repère de l'image obtenue avec le premier capteur 34 et I(x_{capteur2}, y_{capteur2}) pour la même intersection dans le repère de l'image obtenue avec le second capteur 36.

Ainsi, pour chaque image obtenue avec chaque capteur d'images, on connait les coordonnées de touts les points d'intersection des premiers et seconds fils marqueurs 30, 32 dans le repère de l'image associée au capteur 34, 36.

Dans une quatrième étape 52, le procédé consiste à déduire les coordonnées réelles X, Y et Z dans l'espace de chaque point d'intersection I par un calcul de triangulation en utilisant les coordonnées du point dans l'image obtenue avec le premier capteur x_{capteur1}, y_{capteur1}, les coordonnées du point dans l'image obtenue avec le second capteur x_{capteur2}, y_{capteur2} et les positions réelles des capteurs 34, 36 dans l'espace et de l'orientation de leurs axes respectifs 40, 42 dans l'espace (figure 4).

Enfin dans une cinquième étape 54, les positions réelles des points d'intersection des premiers et seconds fils marqueurs 30, 32 sont comparées aux positions théoriques tridimensionnelles de ces mêmes points d'intersection contenues dans une base de données, ce qui permet d'en déduire si la préforme 22 a été ou non correctement tissée.

Dans une réalisation particulière de l'invention, la troisième étape 50 du procédé est réalisée sur n images avec le premier capteur d'images 34 et sur n images obtenues avec le second capteur d'images 36. Ainsi, pour une intersection donnée I du quadrillage de premiers et seconds fils marqueurs, on obtient 2n couples de points de coordonnées x_{i,j}, y_{i,j} où i correspond à la i-ème image prise avec le capteur j, i étant compris entre 1 et n et j prenant la valeur 1 identifiant le premier capteur d'images et la valeur 2 identifiant le second capteur d'images.

Un premier ensemble de n couples de points x_{i,1}, y_{i,1} correspond aux coordonnées du point I du quadrillage dans le repère des images obtenues avec le premier capteur 34 et un deuxième ensemble de n couples de points x_{i,2}, y_{i,2} correspond aux coordonnées du point I du quadrillage dans le repère des images obtenues avec le second capteur 36.

Pour chaque point I mesuré avec la première caméra, on vérifie que l'écart type entre les valeurs x_{i,1} est inférieur à un premier seuil donné et que l'écart type entre les valeurs y_{i,1} est inférieur un second seuil donné.

On effectue la même opération avec les coordonnées du point I x_{i,2} et y_{i,2} obtenues avec la seconde caméra.

Le premier seuil et le second seuil peuvent être identiques et par exemple égal à une valeur de 0,75 pixels. Dans une réalisation pratique du dispositif, un pixel correspond à environ 0,2 mm.

Le nombre n d'images est avantageusement supérieur ou égal à 10.

Dans une réalisation de l'invention, les moyens d'éclairage 44 sont des diodes électroluminescentes dont l'intensité lumineuse est calibrée pour optimiser le contraste entre les premiers et seconds fils marqueurs 30, 32 et les fils de la préforme.

Les capteurs d'images 34, 36 sont des appareils photographiques à matrice de photodétecteurs du type CCD ou CMOS ayant par exemple une résolution de 10 Mégapixels et une focale d'environ 8,5 mm.

Les premiers et seconds fils marqueurs 30, 32 sont par exemple réalisés par un assemblage de fils de verre et de fils de carbone. La préforme est par exemple réalisée par tissage de fils de carbone. Les fils de verre sont de couleur plus claire que les fils de carbone.

Dans une variante de réalisation de l'invention, il est possible d'utiliser un nombre de capteurs d'images supérieur à 2, l'axe de chaque capteur formant un angle non nul avec l'axe d'un autre capteur, les axes des capteurs étant orientés en direction du quadrillage de la préforme. L'utilisation de plusieurs capteurs permet d'améliorer la précision de détection des intersections des premiers et seconds fils marqueurs sur la préforme en ayant des images prises à plusieurs angles de vues différents.

Le procédé selon l'invention peut être utilisé pour le contrôle non destructif de tout type de préforme tissée ayant un quadrillage de surface comme décrit précédemment et n'est pas limité aux préformes d'aubes de soufflante. En particulier, il pourrait être utilisé avec des préformes telles que celles utilisées pour la fabrication de carters ou de plates-formes inter-aubes.

## Revendications

1. Procédé automatisé de contrôle non destructif d'une préforme tissée (22), destinée à la fabrication d'une pièce de turbomachine et comprenant une pluralité de premiers fils marqueurs (30) entrecroisés avec des seconds fils marqueurs (32), les premiers et seconds fils (30, 32) ayant des propriétés de réflexion de la lumière différentes de celles des fils de la préforme et étant tissés avec les fils de la préforme de manière à former un quadrillage de surface sur une zone donnée de la préforme (22), le procédé consistant successivement à :
a) placer la préforme (22) dans une position prédéterminée de manière à ce que le quadrillage de premiers et seconds fils marqueurs (30, 32) soit situé en regard d'au moins deux capteurs d'images (34, 36) visant le quadrillage et ayant des axes optiques (40, 42) formant un angle l'un avec l'autre ;
b) éclairer la zone donnée de la préforme (22) et acquérir avec chaque capteur d'images (34, 36) une image du quadrillage des premiers et seconds fils marqueurs (30, 32) ;
c) déterminer pour chaque image les coordonnées dans le repère de l'image des points d'intersection des premiers et seconds fils marqueurs (30, 32) ;
d) déduire la position réelle dans l'espace de chaque point d'intersection des premiers et seconds fils marqueurs (30, 32) sur la préforme (22) par un calcul de triangulation en utilisant les coordonnées du point d'intersection considéré dans chacune des images obtenues avec les capteurs d'images (34, 36) et au moyen des positions réelles des capteurs (34, 36) dans l'espace et de l'orientation de leurs axes respectifs (40, 42) dans l'espace ;
e) comparer les positions réelles des points d'intersection des premiers et seconds fils marqueurs (30, 32) avec des positions théoriques tridimensionnelles de ces mêmes points d'intersection.

2. Procédé selon la revendication 1, **caractérisé en ce que** l'étape c consiste à :
- à déterminer sur chaque image les contours (57, 59) de zones correspondant aux parties visibles des premiers et seconds fils marqueurs (30, 32) ;
- déterminer pour chaque image des régions (64, 66) comprenant des zones précitées alignées selon les premiers fils marqueurs (30) et les régions comprenant des zones précitées alignées selon les seconds fils marqueurs (32) ;
- déterminer dans chaque région (64, 66) précitée d'image les coordonnées (xᵢ, yᵢ) du centre des différentes zones correspondant aux parties visibles des premiers et seconds fils marqueurs (30, 32) et à générer une courbe mathématique (70, 72) telle qu'une courbe de NURBS passant au mieux par ces coordonnées (xᵢ, yᵢ) ;
- déterminer les coordonnées des points d'intersection entre les courbes mathématiques (70) s'étendant selon les premiers fils marqueurs (30) et les courbes (72) s'étendant selon les seconds fils marqueurs (32).

3. Procédé selon la revendication 2, **caractérisé en ce que** les contours (57, 59) des zones correspondant aux parties visibles (60, 62) des premiers et seconds fils marqueurs sont déterminés par seuillage dynamique en fonction de leur forme et du niveau de réflexion de lumière par rapport au reste de l'image.

4. Procédé selon l'une des revendications 2 ou 3, **caractérisé en ce que** le centre de chaque zone (60, 62) de partie visible des premiers et seconds fils marqueurs (30, 32) est déterminé en assimilant chaque dite zone à une ellipse.

5. Procédé selon l'une des revendications précédentes, **caractérisé en ce que** les étapes b et c sont répétées n fois et **en ce que** les étapes suivantes sont initiées en fonction du calcul d'un critère de précision de mesure des coordonnées de chaque intersection.

6. Procédé selon la revendication 5, **caractérisé en ce que** le critère de précision consiste en un calcul d'écart type sur les coordonnées de chaque intersection dans chaque image, les étapes suivants les étapes b et c étant initiées pour un écart-type inférieur à un seuil donné.

7. Procédé selon l'une des revendications 5 ou 6, **caractérisé en ce que** le nombre n est supérieur à 10.

8. Procédé selon l'une des revendications précédentes, **caractérisé en ce que** la préforme (22) est une préforme d'aube de soufflante et **en ce que** le quadrillage de premiers et seconds fils marqueurs (30, 32) est formé sur la face d'extrados ou la face d'intrados de l'aube.

9. Procédé selon la revendication 7, **caractérisé en ce que** la préforme est tissée avec des fils de carbone et **en ce que** les fils marqueurs (30, 32) sont réalisés par un assemblage de fils de verre et de fils de carbone, les fils de verre étant de couleur plus claire que les fils de carbone

10. Procédé selon l'une des revendications précédentes, **caractérisé en ce que** la préforme (22) est montée sur un support (20) conformé pour supporter la préforme (22) dans une position prédéterminée puis est déplacée en regard des capteurs d'images (34, 36) à l'intérieur d'une enceinte (14) à parois absorbant les rayons lumineux et logeant des moyens d'éclairage (44) de la préforme.

11. Procédé selon l'une des revendications précédentes, **caractérisé en ce que** les capteurs d'images (34, 36) sont des appareils photographiques à matrice de photodétecteurs du type CCD ou CMOS ayant par exemple une résolution de 10 Mégapixels et une focale d'environ 8,5 mm.

## Patentansprüche

1. Automatisiertes, zerstörungsfreies Verfahren zur Prüfung eines gewebten Vorformlings (22), der zur Herstellung eines Turbomaschinenteils bestimmt ist und eine Vielzahl von ersten Markerfäden (30) aufweist, die sich mit den zweiten Markerfäden (32) kreuzen, wobei die ersten und zweiten Fäden (30, 32) unterschiedliche Lichtreflektionseigenschaften haben als die Fäden des Vorformlings, und diese mit den Fäden des Vorformlings so verwebt sind, dass sie ein Gitternetz in einem bestimmten Bereich des Vorformlings (22) bilden, wobei das Verfahren nacheinander darin besteht:
a) den Vorformling (22) in eine bestimmte Position zu bringen, so dass sich das Gitternetz der ersten und zweiten Markerfäden (30, 32) gegenüber von mindestens zwei Bildsensoren (34, 36) befindet, welche das Gitternetz anvisieren und optische Achsen (40, 42) aufweisen, die zueinander einen Winkel bilden;
b) den vorgegebenen Bereich des Vorformlings (22) zu beleuchten und mit jedem Bildsensor (34, 36) ein Bild des Gitternetzes der ersten und zweiten Markerfäden (30, 32) zu erfassen;
c) bei der Bildmarkierung der Schnittpunkte bei jedem Bild die Koordinaten der ersten und zweiten Markerfäden (30, 32) zu bestimmen;
d) daraus die tatsächliche Position der ersten und zweiten Markerfäden (30, 32) jedes Schnittspunkts im Raum auf dem Vorformling (22) für eine Triangulationsberechnung durch Benutzen der Koordinaten des betreffenden Schnittpunkts in jedem der mit den Bildsensoren (34, 36) und mittels der tatsächlichen Positionen der Sensoren (34, 36) im Raum und der räumlichen Ausrichtung ihrer Achsen (40, 42) erhaltenen Bilder abzuleiten;
e) die tatsächlichen Positionen der Schnittstellen der ersten und zweiten Markerfäden (30, 32) mit den theoretischen dreidimensionalen Positionen dieser Schnittpunkte zu vergleichen.

2. Verfahren nach Anspruch 1, **dadurch gekennzeichnet, dass** Schritt c darin besteht:
- bei jedem Bild die Konturen (57, 59) der Bereiche zu ermitteln, die den sichtbaren Teilen der ersten und zweiten Markerfäden (30, 32) entsprechen;
- bei jedem Bild Regionen (64, 66) zu bestimmen, die die vorgenannten, auf die ersten Markerfäden (30) ausgerichteten Bereiche umfassen, und Regionen, die die vorgenannten, auf die zweiten Markerfäden (32) ausgerichteten Bereiche umfassen.
- für jede vorgenannte Bildregion (64, 66) die Koordinaten (Xi, Yi) des Mittelspunkts der verschiedene Bereiche, welche den sichtbaren Teilen der ersten und zweiten Markerfäden (30, 32) entsprechen, zu bestimmen und eine mathematische Kurve (70, 72) zu generieren, beispielsweise eine NURBS, die bestmöglich durch die Koordinaten (Xi, Yi) verläuft.
- die Koordinaten der Schnittpunkte zwischen den mathematischen Kurven (70), die sich in der Richtung der ersten Markerfäden (30) erstrecken, und den Kurven (72), die sich in der Richtung der zweiten Markerfäden (32) erstrecken, zu bestimmen;

3. Verfahren nach Anspruch 2, **dadurch gekennzeichnet, dass** die Konturen (57, 59) der Bereiche, die den sichtbaren Teilen (60, 62) der ersten und zweiten Markerfäden entsprechen, durch dynamischen Schwellenwertvergleich entsprechend ihrer Form und dem Lichtreflektionsniveau in Bezug auf das übrige Bild bestimmt werden.

4. Verfahren nach einem der Ansprüche 2 und 3, **dadurch gekennzeichnet**, das die Mitte jedes Bereichs (60, 62) der sichtbaren Teile der ersten und zweiten Markerfäden (30, 32) bestimmt wird, indem jeder Bereich einer Ellipse zugeordnet wird.

5. Verfahren nach einem der vorhergehenden Ansprüche, **dadurch gekennzeichnet, dass** die Schritte b und c n Mal wiederholt werden und die nachfolgenden Schritte entsprechend der Berechnung eines Präzisionskriteriums für die Messung der Koordinaten jedes Schnittpunkts initiiert werden.

6. Verfahren nach Anspruch 5, **dadurch gekennzeichnet, dass** das Präzisionskriterium in der Berechnung einer Standardabweichung auf den Koordinaten jedes Schnittpunkts in jedem Bild besteht, wobei die auf die Schritte b und c folgenden Schritte bei einer Standardabweichung, die unter einem bestimmten Grenzwert liegt, initiiert werden.

7. Verfahren nach einem der Ansprüche 5 oder 6, **dadurch gekennzeichnet, dass** die Zahl n größer ist als 10.

8. Verfahren nach einem der vorhergehenden Ansprüche, **dadurch gekennzeichnet, dass** der Vorformling (22) eine Vorform einer Bläserschaufel ist, und darin, dass das Gitternetz der ersten und zweiten Markerfäden (30, 32) auf der Außenseite oder der Innenseite der Schaufel gebildet wird.

9. Verfahren nach Anspruch 7, **dadurch gekennzeichnet, dass** der Vorformling gewebt wird mit Karbonfasern, und dadurch, dass die Markerfäden (30, 32) hergestellt werden aus einer Verbindung von Glas- und Karbonfasern, wobei die Glasfasern heller sind, als die Karbonfasern.

10. Verfahren nach einem der vorhergehenden Ansprüche, **dadurch gekennzeichnet, dass** der Vorformling (22) montiert wird auf einen Träger (20), der so angepasst ist, dass er den Vorformling (22) in einer bestimmten Position stützen kann, in Bezug auf die Bildsensoren (34, 36) in ein Gehäuse (14) mit lichtstrahlabsorbierenden Wänden geschoben wird und in den Beleuchtungsmitteln (44) des Vorformlings aufliegt.

11. Verfahren nach einem der vorhergehenden Ansprüche, **dadurch gekennzeichnet, dass** die Bildsensoren (34, 36) fotografische Geräte mit Photodetektorenanordnung vom Typ CCD oder CMOS sind, die beispielsweise eine Auflösung von 10 Megapixel und eine Brennweite von ungefähr 8,5 mm haben.

## Claims

1. An automated method for the non-destructive testing of a woven preform (22), intended for manufacturing a turbine engine part and comprising a plurality of first marker threads (30) intertwined with second marker threads (32), the first and second threads (30, 32) having light-reflection properties different from those of the threads of the preform and being woven with the threads of the preform so as to form a surface grid on a given area of the preform (22), the method consisting successively of:
a) placing the preform (22) in a predetermined position so that the grid of first and second marker threads (30, 32) is situated opposite at least two image sensors (34, 36) aimed at the grid and having optical axes (40, 42) forming an angle with each other;
b) illuminating the given area of the preform (22) and acquiring, with each image sensor (34, 36), an image of the grid of first and second marker threads (30, 32);
c) determining for each image the coordinates in the reference frame of the image of the points of intersection of the first and second marker threads (30, 32);
d) deducing the actual position in space of each point of intersection of the first and second marker threads (30, 32) on the preform (22) by a triangulation calculation using the coordinates of the point of intersection in question in each of the images obtained with the image sensors (34, 36) and by means of the actual positions of the sensors (34, 36) in space and the orientation of their respective axes (40, 42) in space;
e) comparing the actual positions of the points of intersection of the first and second marker threads (30, 32) with three-dimensional theoretical positions of these same points of intersection.

2. A method according to claim 1, **characterised in that** step c consist of:
- determining on each image the contours (57, 59) of areas corresponding to the visible parts of the first and second marker threads (30,32);
- determining for each image regions (64, 66) comprising aforementioned areas aligned on the first marker threads (30) and the regions comprising aforementioned areas aligned on the second marker threads (32);
- determining in each aforementioned image region (64, 66) the coordinates (xᵢ, yᵢ) of the centre of barycentre of the various areas corresponding to the visible parts of the first and second marker threads (30, 32) and generating a mathematical curve (70, 72) such as an NURBS curve best passing through these coordinates (xᵢ, yᵢ);
- determining the coordinates of the points of intersection between the mathematical curves (70) extending along the first marker threads (30) and the curves (72) extending along the second marker threads (32).

3. A method according to claim 2, **characterised in that** the contours (57, 59) of the areas corresponding to the visible parts (60, 62) of the first and second marker threads are determined by dynamic thresholding according to their form and the light-reflection level compared with the rest of the image.

4. A method according to one of claims 2 or 3, **characterised in that** the centre of each visible-part area (60, 62) of the first and second marker threads (30, 32) is determined by assimilating each area to an ellipse.

5. A method according to one of the preceding claims, **characterised in that** steps b and c are repeated n times and **in that** the following steps are initiated according to the calculation of a required criterion of precision of measurement of the coordinates of each intersection.

6. A method according to claim 5, **characterised in that** the precision criterion consists of a standard deviation calculation on the coordinates of each intersection in each image, the steps following steps b and c being initiated for a standard deviation below a given threshold.

7. A method according to one of claims 5 or 6, **characterised in that** the number n is greater than 10.

8. A method according to one of the preceding claims, **characterised in that** the preform (22) is a fan blade preform and **in that** the grid of first and second marker threads (30, 32) is formed on the convex face or the concave face of the blade.

9. A method according to claim 7, **characterised in that** the preform is woven with carbon threads and **in that** the marker threads (30, 32) are produced by an assembly of glass threads and carbon threads, the glass threads having a lighter colour than the carbon threads.

10. A method according to one of the preceding claims, **characterised in that** the preform (22) is mounted on a support (20) conformed so as to support the preform (22) in a predetermined position and is then moved opposite the image sensors (34, 36) inside a chamber with walls absorbing the light rays and housing means (44) for illuminating the preform.

11. A method according to one of the preceding claims, **characterised in that** the image sensors (34, 36) are cameras with a matrix of photodetectors of the CCD or CMOS type having for example a resolution of 10 megapixels and a focal length of approximately 8.5 mm.
